Europäisches Patentamt

(19) European Patent Office

Office européen des brevets

(11) Publication number: **0 049 927**
**B1**

## (12) EUROPEAN PATENT SPECIFICATION

(45) Date of publication of patent specification: **20.02.85**

(21) Application number: **81201103.9**

(22) Date of filing: **05.10.81**

(51) Int. Cl.⁴: **A 23 L 1/24,** A 23 C 9/13

(54) A method of preparing a mayonnaise-type dressing having good keeping characteristics.

(30) Priority: **06.10.80 NL 8005515**

(43) Date of publication of application:
**21.04.82 Bulletin 82/16**

(45) Publication of the grant of the patent:
**20.02.85 Bulletin 85/08**

(84) Designated Contracting States:
**AT BE CH DE FR GB LI SE**

(56) References cited:
**DE-A-2 145 979**
**FR-A-2 242 033**
**FR-A-2 357 190**
**GB-A-1 527 526**
**NL-A-6 911 362**
**NL-A-7 404 267**
**US-A-1 697 312**
**US-A-3 025 165**

**JOURNAL OF DAIRY SCIENCE, vol. 51, 1968**
**W.K. STONE et al. "Fermentation process for**
**dairy base dressing for salads", page 620**

(73) Proprietor: **DMV-Campina B.V.**
**NCB Laan 68**
**NL-5462 GE Veghel (NL)**

(72) Inventor: **Evers, Paulus Hendricus Johannes M.**
**Creytestraat 11**
**NL-5841 AL Oploo (NL)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

EP 0 049 927 B1

Courier Press, Leamington Spa, England.

## Description

This invention relates to a method of preparing a heat-stable mayonnaise-type dressing having good keeping characteristics, which comprises preparing a mixture using an oil and/or fat and other components conventional for the preparation of mayonnaise.

In British patent 1,527,526, the preparation of a mayonnaise-type sterilisable dressing is described, in which a mixture of:

    15—50% by weight of oil
    0.3—4% by weight of milk protein
    1—3% by weight of carbohydrates
    1.5—2.5% by weight of a substance which
      adjusts the pH to a value of between 3.7 and
      5.5
    38.5—82.7 by weight of water

is carefully mixed and homogenized, subsequently tinned, and sterilised at a temperature of 118°C for twenty minutes. Although after sterilisation and cooling, such a dressing can be kept for a considerably longer period of time than mayonnaise prepared in the conventional manner, yet it cannot be kept longer than a few months without loss of stability and without loss in taste.

Furthermore, it is known from Dutch patent application No. 77,02829 that mayonnaise and mayonnaise-containing products can be prepared, which can be kept for a longer period of time, even if they are stored without refrigeration, if the starting product is coagulated egg yolk, such as for example egg yolk powder, and milk protein, e.g. skim milk powder, protein, starch and a stabilizer, by mixing these together while adding salt, oil and colours, passing the mixture by means of a metering pump to a heater, in which the material is heated for a short time at a temperature of approximately 80—100°C; subsequently passing the material to a cooler, in which it is cooled to room temperature or to a lower temperature; thereafter emulsifying the cooled material with oil in an apparatus suitable for the purpose, and subsequently mixing it with vinegar and possibly other additives by means of a fast stirrer, and finally re-pasteurizing the mayonnaise prepared in this manner at a temperature of approximately 80—100°C for a short time, and recooling it in a cooler.

Although, in this way, mayonnaise and mayonnaise-containing products of excellent quality and good keeping characteristics can be obtained, the method yet has the disadvantages that

    a. it is unsuitable for dressings having considerably lower fat contents, for one thing in connection with imparting the proper structure to the product, which without the use of additional measures cannot be obtained;

    b. just as the conventional process, the method is productive of mayonnaise dressings which in time acquire a rancid flavour, which when exposed to light may be the case after a relatively short period of time.

It is accordingly an object of the present invention to provide a method for preparing a product which can be kept for a relatively long period of time without losing its flavour, taste and structure and, by virtue of having a relatively low fat content, is suitable for consumption by persons to whom a low-fat diet has been prescribed, or persons preferring a low-fat diet.

It has been found that a heat-stable dressing having a mayonnaise structure and having good keeping characteristics can be prepared which, as compared to mayonnaise, has a low fat content, and contains at least some of the conventional components of mayonnaise, such as oil or fat, egg yolk or egg yolk powder, thickening agent, sugars, edible salts and/or edible acids, using a method which is characterized by mixing a heat-stable yoghurt product which has been prepared by fermenting milk in the conventional manner, possibly followed by mixing with water, edible sugars, edible salts and/or edible acids, homogenizing the mixture thus obtained and subsequently heating it to a temperature of between 45 and 53°C with agitation and while maintaining a temperature difference from the heating medium of no more than 12°C, immediately thereafter cooling to a temperature ranging between 20 and 35°C, while maintaining a similar difference in temperature from the cooling medium, and re-homogenizing, possibly followed by sterilization or pasteurization of the resulting mixture, with oil or fat in a proportion of less than 35% by weight, calculated on the ready dressing, as well as with other components from the above series of components conventional in mayonnaise, thoroughly stirring the resulting mixture, and processing it into a stiff mass.

According to this invention, a yoghurt product is used, from which no whey is separated, which is heat-stable and, has good keeping characteristics.

The method of preparing such yoghurt product having good keeping characteristics is described in Dutch patent application No. 79,08307.

A dressing which excellently satisfies the above requirements, and the structure and taste of which are similar to those of mayonnaise, can be prepared by using a proportion of oil and/or fat of less than 35% by weight, and preferably by using 45—90% by weight of the yoghurt product and 7—30% by weight of the oil or the fat, calculated on the ready dressing, and balance being made up by said conventional components. Surprisingly, in spite of this relatively low fat content, the ultimate dressing has an excellent structure and stability.

Products prepared by the method comprised in the present invention have not only been organoleptically and visually appraised and compared with mayonnaises as marketed by various manufacturers, but also with some products of other manufacturers by means of their rheological behaviour.

For this purpose the yield value and the dynamic viscosity were measured under certain conditions.

The above physical parameters were compared for:

— product A, a dressing according to the present invention containing butter fat as the only fat,
— product B, a dressing according to the present invention containing butter fat and sunflower seed oil as fat,
— product C, a commercial mayonnaise of a first-class brand,
— product D, a commercial mayonnaise of a retail chain's private brand,
— product E, a salad dressing of a top-quality brand,
— product F, a salad dressing of a popular brand.

The values were measured using a programmed Haake rotational viscometer, type RV2, which in fact measures the resistance at a continuously varying rotary speed, which is kept constant for a short period of time, for a rotary body of an accurately defined shape and size.

The yield value, as is well-known, is the value which the shear stress must reach before the mass is going to move, and the dynamic viscosity is defined as:

$$\eta = \frac{\tau}{D}$$

where
  $\eta$=the dynamic viscosity (in pascal seconds)
  $\tau$=the shear stress (in pascal seconds)
  D=the velocity drop per unit of length across the path over which the velocity drop takes place (in reciprocal seconds)
where
  D=M.n
  M=shear rate factor
  n=rotary speed (rpm).

In the Haake rotation viscometer, shearing action on the mass is produced in the space between the rotating cylindrical outer wall of the rotary member and the stationary cylindrical inner wall of the vessel in which the rotary member and the mass under test are contained. The distance between these two cylindrical walls is the path across which the velocity drop takes place in the mass upon rotation of the rotary member. The recorder connected to the viscometer records a curve during the measurement, the scale value S of which is plotted against the time. In the case of plastic materials, corresponding to the Bingham or Casson model, such as creams, lubricating fats and mayonnaises, a yield value will always be observed. The value thereof can be deduced from the above curve, and corresponds to:

$$\tau_0 = A \cdot S_0$$

where
  $\tau_0$=the yield value
  A=the shear stress factor
  $S_0$=the scale value, at which there is just no shear.

By carrying out the measurement in such a way that the rotary speed is first increased linearly in time, thereafter is kept constant for a short period of time at a pre-determined value, and subsequently is again linearly decreased in time, it is achieved that a more or less symmetrical picture is obtained, in which, for plastic materials, when the rotary speed is decreased, it is not the value 0 that is ultimately reached for S, but after a number of seconds S remains constant a value higher than 0. This value is then counted as $S_0$ and introduced into the above formula, and multiplied by the value for A associated with the selected rotary member, with the product accordingly being the yield value. When the value found for S at the end of the short period in which the rotary speed is constant is always used as the starting point for calculating the dynamic viscosity, and the curve accordingly more or less approaches a straight line, the dynamic viscocity of different products can be obtained under perfectly comparable conditions by means of the following formula:

$$\eta = \frac{\tau}{D} = \frac{A}{M} \cdot \frac{S}{n}$$

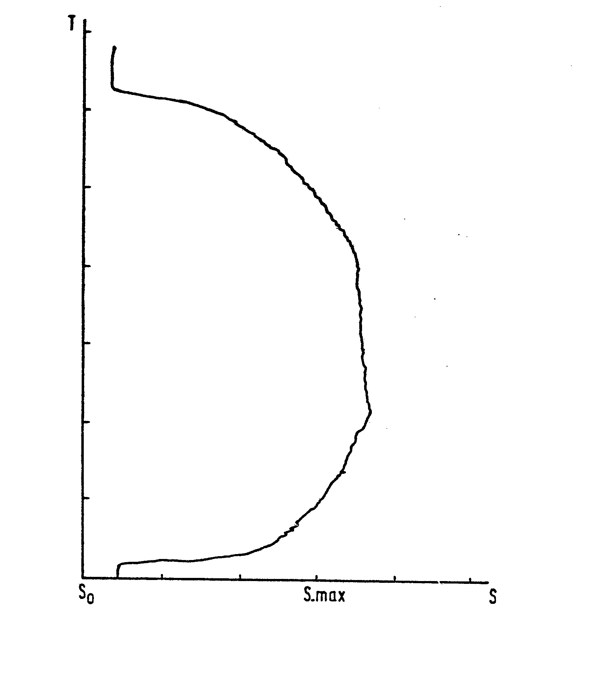

In Figure 1 such a curve is shown, in which the S value was determined at a paper velocity of 20 mm/minute and n max was 32 rpm.

In table 1, the results of the measurements with products A, B, C, D, E and F are summarized.

# 0 049 927

TABLE 1
Comparison of some products according to the invention with some commercial products

| Product designation | Fat content (%) | Yield value (Pa) | Viscosity (Pa.s) |
|---|---|---|---|
| A | 26.6 | 23 | 5.8 |
| B | 26.5 | 20 | 5.2 |
| C | 83.4 | 21 | 5.6 |
| D | 84.2 | 8 | 6.1 |
| E | 26.2 | 9 | 1.6 |
| F | 24.7 | 4 | 1.9 |

The oil and/or fat component used in the method according to the invention may be butter oil or molten butter, a liquid fraction from butter oil, cream, vegetable oil, a liquid fraction from a vegetable oil or fat, separately or in admixture with each other. Excellent results are obtained by using as the oil or fat butter oil, butter fat, a liquid fraction from butter oil or a liquid fraction from butter fat. Preferably, at least a portion of the oil and/or the fat is incorporated in the milk from which the yoghurt product is prepared before the milk is fermented with yoghurt culture.

The invention is illustrated in and by the following examples.

Example I

1000 kg milk, the milk fat content of which had been adjusted to 8.8% by weight, were homogenized at a pressure of 20 MPa, heated to 98°C, kept at this temperature for 2.5 minutes, and subsequently cooled to 30°C, at which temperature the milk was subjected to a fermentation with 0.13 kg IST culture (a yoghurt startculture of NIZO, The Netherlands), which fermentation was continued until the pH value had decreased to 4.2. After cooling to 15°C, the pH value was checked and adjusted to 4.1 by means of citric acid of food quality. Subsequently, 13 kg water and 1.1 kg citrus pectine were added and admixed with stirring. After thorough stirring, the mass was homogenized at a pressure of 20 MPa (200 kg/cm²), whereafter it was heated to a temperature of 51°C in a through-flow heat exchanger, using a temperature difference between heating medium and product of 12°C. Immediately after reaching this temperature of 51°C, which was accurately checked, the mass was cooled to 32°C with the ΔT between product and the cooling medium also being 12°C. After reaching the temperature of 32°C the mass was again homogenized at a pressure of 20 MPa, whereafter it was subjected, with agitation, to a heat treatment at 90°C and subsequently cooled to 60°C. At this last temperature the yoghurt product was carefully mixed with:

50 kg sugar
30 kg starch
15 kg kitchen salt
12 kg egg yolk powder
10 kg water
10 kg guar, carragheenate and LM pectine (a product of Hercules AB, Denmark)
0.6 kg edible salts and flavour concentrate
0.3 kg glacial acetic acid

After further stirring the mass was homogenized at a pressure of 10 MPa (100 kg/cm²) subjected to a heat treatment at 110°C for thirty seconds and subsequently packed in glass jars in warm condition. The dressing thus prepared, which had a fat content of 7.7% had a good mayonnaise structure, which after 6 months' storage at room temperature was found to be fully in tact, while the product still had the same fresh taste.

Example II

Using exactly the same procedure as in Example I, a thermostable yoghurt product was prepared from 1000 kg milk having a fat content of 8.8%, which product, after the combined homogenization/heat treatment/homogenization, heat treatment at 90°C and cooling to 60°C was mixed with:

50 kg sugar (melis)
30 kg starch (mixture native and pre-gelatinized)
50 kg sunflower seed oil
17 kg kitchen salt
12 kg egg yolk powder
10 kg water
10 kg guar, carragheenate and pectine
0.6 kg edible salts and flavours
0.3 kg acetic acid

After careful admixture, the mass was homogenized at a pressure of 10 MPa and sub-

4

sequently subjected to a heat treatment for twenty five seconds at 120°C followed by cooling to 55°C and packing. The product was found to have a fat content of 9.8% by weight, had a pleasant taste and a firm mayonnaise structure, which both were fully maintained after six months' storage. A quantity of the product was heated in a porcelain dish at 130°C and re-cooled to 20°C. The structure was found to be fully retained; and no separation of oil or water was observed.

Example III

800 kg skim milk was pasteurized and fermented with 0.14 kg IST culture. The fermentation was terminated when the pH value was 4.2, whereafter the mass was mixed with:

14 kg water
1.2 kg citrus pectine

Subsequently the liquid was subjected to homogenization at a pressure of 20 MPa with through-flow, warming up to 51°C, maintaining a ΔT of 10°C, cooling to 33°C, maintaining a ΔT of 10°C, re-homogenization at a pressure of 20 MPa, followed by a heat treatment at 90°C, and cooling to 60°C. At the last temperature the yoghurt product was mixed with:

340 kg butter fat
55 kg sugar
33 kg starch (partially pre-gelatinized)
16 kg kitchen salt
15 kg egg yolk
11 kg water
10 kg guar, carragheenate and pectinate
0.6 kg flavour concentrate
0.3 kg glacial acetic acid

After careful admixture, the mass was homogenized at 10 MPa, subjected to a heat treatment for thirty-two seconds at 110°C, and after cooling to 50°C was packed under nitrogen in an air-tight package. The product turned out to have a pleasant taste, had a good mayonnaise structure at a fat content of 26.6%, was heat-stable and could be stored for over 6 months without any objections.

Example IV

Using the procedure described in Example I, 1000 kg milk having a fat content of 8.0% was converted into a yoghurt product having good keeping characteristics, of which, after homogenisation, heat treatment at 51°C, cooling, homogenisation, heat treatment at 90°C and cooling to 60°C, 870 kg was admixed with:

250 kg sunflower seed oil
55 kg sugar
33 kg starch (partially gelatinized)
16 kg kitchen salt
15 kg egg yolk powder
11 kg water
10 kg guar
0.6 kg flavour concentrate
0.3 kg glacial acetic acid

After mixing and homogenization at 10 MPa, the mass was subjected to a heat treatment for thirty seconds at 110°C, cooled to 50°C, and packaged under nitrogen in air-tight package.

The product had a fat content of 26.5%, had a good taste, a good mayonnaise structure, was heat-stable, and after six months' storage at room temperature did not exhibit any oil or water separation.

Example V

The procedure of Example III was repeated, but instead of 15 kg egg yolk powder, 10 kg sodium caseinate was mixed with the other ingredients. With this formulation, too, a dressing was obtained which satisfied the demands made.

**Claims**

1. A method of preparing a heat-stable mayonnaise-type dressing having good keeping characteristics, which comprises preparing a mixture using an oil and/or fat and other components conventional for the preparation of mayonnaise, characterized by mixing a heat-stable yoghurt product, which has been prepared by fermenting milk in the conventional manner, possibly followed by mixing with water, edible sugars, edible salts and/or edible acids, homogenizing the mixture thus obtained, and subsequently heating it to a temperature of between 45 and 53°C with agitation and while maintaining a temperature difference from the heating medium of no more than 12°C, immediately thereafter cooling to a temperature of between 20°C and 35°C, while maintaining a similar difference in temperature from the cooling medium, and re-homogenizing, possibly followed by sterilization or pasteurization of the resulting mixture, with oil or fat in a proportion of less than 35% by weight, calculated on the ready dressing, as well as with other components conventional for the preparation of mayonnaise, thoroughly stirring the resulting mixture, and processing it into a stiff mass.

2. A method as claimed in claim 1, characterized by using 45—90% by weight of the yoghurt product and 7—30% by weight of the oil or the fat, calculated on the ready dressing, the balance being made up by said conventional components.

3. A method as claimed in claim 1 or claim 2, characterized by using as the oil or fat butter oil, butter fat, a liquid fraction from butter oil or a liquid fraction from butter fat.

4. A method as claimed in any of claims 1—3, characterized in that at least a portion of the oil and/or the fat is incorporated in the milk from which the yoghurt product is prepared before the milk is fermented with yoghurt culture.

**Patentansprüche**

1. Herstellungsverfahren für eine wärmestabile Mayonnaise-Zubereitung (Dressing) mit guten Haltbarkeitseigenschaften, bei dem eine Mischung unter Verwendung eines Öles und/oder Fettes und anderer für die Mayonnaise-Zubereitung üblicher Bestandteile hergestellt wird, gekennzeichnet durch Anrühren eines wärmestabilen Yoghurt-Produktes, welches durch Gären von Milch in üblicher Weise hergestellt wurde, möglicherweise gefolgt durch Mischen mit Wasser, eßbaren Zuckern, eßbaren Salzen und/oder eßbaren Säuren, Homogenisieren der so erhaltenen Mischung und nachfolgendes Erwärmen derselben auf eine Temperatur von zwischen 45 und 53°C unter heftiger Bewegung und unter Aufrechterhalten einer Temperaturdifferenz zum Erwärmungsmedium von nicht mehr als 12°C, unmittelbar nachfolgendes Kühlen auf eine Temperatur von zwischen 20°C und 35°C unter Aufrechterhalten einer ähnlichen Temperaturdifferenz von dem Kühlmedium und Rehomogenisieren, möglicherweise gefolgt von Sterilisieren oder Pasteurisieren der erhaltenen Mischung mit Öl oder Fett in einem Verhältnis von weniger als 35 Gew.-%, bezogen auf das fertige Dressing, sowie mit anderen für die Mayonnaise-Zubereitung üblichen Komponenten, gründliches Rühren der resultierenden Mischung und Verarbeiten derselben zu einer steifen Masse.

2. Herstellungsverfahren nach Anspruch 1, gekennzeichnet durch die Verwendung von 45—90 Gew.-% des Yoghurt-Produktes und 7—30 Gew.-% des Öles oder des Fettes, bezogen auf das fertige Dressing, wobei der Rest aus den üblichen Komponenten besteht.

3. Herstellungsverfahren nach Anspruch 1 oder 2, gekennzeichnet durch Verwenden von Butteröl, Butterfett, einer Flüssigfraktion von Butteröl oder einer Flüssigfraktion von Butterfett als das Öl oder Fett.

4. Herstellungsverfahren nach einem der Ansprüche 1 bis 3, dadurch gekennzeichnet, daß zumindest ein Teil des Öles und/oder Fettes in der Milch vorliegt, aus der das Yoghurt-Produkt zubereitet ist bevor die Milch mit Yoghurt-Kultur gegoren wird.

**Revendications**

1. Procédé de préparation d'un assaisonnement du type mayonnaise stable à la chaleur et ayant de bonnes caractéristiques de conservation, qui consiste à préparer un mélange en utilisant une huile et/ou une matière grasse et d'autres composants classiques pour la préparation de la mayonnaise, caractérisé en ce qu'on mélange un produit du type yoghourt stable à la chaleur qui a été préparé par fermentation du lait de façon classique, qu'on fait suivre éventuellement d'un mélange avec l'eau, des sucres comestibles, des sels comestibles et/ou des acides comestibles, on homogénéise le mélange ainsi obtenu et ultérieurement on le chauffe à une température de 45 à 53°C avec agitation et tout en maintenant une différence de température par rapport au milieu chauffant qui ne dépasse pas 12°C, immédiatement après on refroidit à une température de 20 à 35°C tout en maintenant une différence similaire des températures par rapport au milieu de refroidissement, et on homogénéise à nouveau, en faisant suivre éventuellement cette opération d'une stérilisation ou pasteurisation du mélange résultant, l'huile ou la matière grasse étant en une proportion inférieure à 35% en poids, calculée par rapport à l'assaisonnement prêt, ainsi qu'avec d'autres composants classiques pour la préparation de la mayonnaise, on agite intimement le mélange résultant et on le traite pour obtenir une masse rigide.

2. Procédé selon la revendication 1, caractérisé en ce qu'on utilise 45 à 90% en poids du produit le yoghourt et de 7 à 30% en poids d'huile ou de graisse, calculés sur l'assaisonnement terminé, le complément étant constitué desdits composants classiques.

3. Procédé selon la revendication 1 ou 2 caractérisé en ce qu'on utilise à titre d'huile ou d'huile de beurre gras, la graisse du beurre, une fraction liquide de l'huile de beurre et une fraction liquide de la graisse du beurre.

4. Procédé selon l'une quelconque des revendications 1 à 3, caractérisé en ce qu'au moins une portion de l'huile et/ou de la matière grasse est incorporée dans le lait avec lequel on prépare le yoghourt avant la fermentation du lait par la culture de yoghourt.